(19) Europäisches Patentamt
European Patent Office
Office européen des brevets

(11) **EP 4 661 318 A1**

(12) **EUROPEAN PATENT APPLICATION**
published in accordance with Art. 153(4) EPC

(43) Date of publication:
**10.12.2025 Bulletin 2025/50**

(21) Application number: **23927336.0**

(22) Date of filing: **13.03.2023**

(51) International Patent Classification (IPC):
*H04B 10/516* (2013.01)

(52) Cooperative Patent Classification (CPC):
**H04B 10/516**

(86) International application number:
**PCT/JP2023/009475**

(87) International publication number:
**WO 2024/189712 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **BINKAI, Masashi**
  **Tokyo 100-8310 (JP)**
• **YOSHIDA, Tsuyoshi**
  **Tokyo 100-8310 (JP)**

(74) Representative: **Plasseraud IP**
**104 Rue de Richelieu**
**CS92104**
**75080 Paris Cedex 02 (FR)**

(54) **TRANSMISSION DIGITAL SIGNAL GENERATION CIRCUIT AND OPTICAL TRANSMITTER**

(57)    An optical transmitter according to the technology of the present disclosure converts an occurrence probability of a symbol (X) into a histogram, and determines allocation of a DAC (121) on the basis of a cumulative frequency of the histogram, a class value of the histogram is a value of the symbol (X), a frequency is non-zero in any class, and a total number of the frequencies is a quantization number of the DAC (121).

FIG. 4

**Description**

TECHNICAL FIELD

The technology of the present disclosure relates to a transmission digital signal generation circuit and an optical transmitter.

BACKGROUND ART

A transmission digital signal generation circuit according to the technology of the present disclosure and an optical transmitter that includes this transmission digital signal generation circuit as a component are applied to, for example, optical fiber communication (hereinafter, referred to as "core large-volume optical fiber communication") in a core network. One of pioneering signal processing technologies in a technical field of the core large-capacity optical fiber communication includes "compression shaping" developed by the applicant.

To put it simply, "compression shaping" is a technology obtained by fusing data compression that is information source coding and probabilistic constellation shaping (hereinafter, simply referred to as "PS") that is channel coding. A theoretical aspect of compression shaping is described in, for example, Non-Patent Literature 1.

CITATION LIST

NON-PATENT LITERATURE

Non-Patent Literature 1: "Probabilistic Constellation Shaping and Quasi Data Compression in Fiber-Optic Communications", Tsuyoshi YOSHIDA and Koji IGRASHI, the Institute of Electronics, Information and Communication Engineers journal B Vol. J103-B No. 9 pp. 361 to 371, 2020

SUMMARY OF INVENTION

TECHNICAL PROBLEM

As described above, compression shaping is a recent pioneering technology, and therefore an implementation aspect or an application aspect of compression shaping has not been discussed enough. Although, in a case where, for example, compression shaping is applied, when communication traffic decreases, data is compressed, and average symbol energy of a transmission data symbol changes, output signal quality may deteriorate or a subsequent stage system may destabilize at this time.

An object of the technology of the present disclosure is to propose compression shaping that addresses a change in average symbol energy, and provide a transmission digital signal generation circuit and an optical transmitter that perform more practical compression shaping.

SOLUTION TO PROBLEM

An optical transmitter according to the technology of the present disclosure converts an occurrence probability of a symbol (X) into a histogram, and determines allocation of a DAC on a basis of a cumulative frequency of the histogram, a class value of the histogram is a value of the symbol (X), a frequency is non-zero in any class, and a total number of the frequencies is a quantization number of the DAC.

ADVANTAGEOUS EFFECTS OF INVENTION

A transmission digital signal generation circuit according to the technology of the present disclosure employs the above configuration, and consequently can perform compression shaping that addresses a change in average symbol energy.

BRIEF DESCRIPTION OF DRAWINGS

FIG. 1 illustrates a system model that indicates an optical fiber communication system.
FIG. 2 is a view 1 for describing compression shaping, and illustrates an example of a functional block configuration.

FIG. 3 a view 2 for describing compression shaping, and illustrates an example of a symbol probability distribution.
FIG. 4 is a block diagram illustrating a functional configuration of an optical transmitter according to Embodiment 1.
FIG. 5 is a view illustrating a numerical value example of digital amplitude adjustment of an optical transmitter according to a conventional technology.
FIG. 6 is a view 1 illustrating a numerical value example of digital amplitude adjustment of the optical transmitter that performs compression shaping.
FIG. 7 is a view 2 illustrating a numerical value example of digital amplitude adjustment of the optical transmitter that performs compression shaping.
FIG. 8 is a view for describing an example where undesirable clipping occurs as a result of digital amplitude adjustment.
FIG. 9 is a view for describing allocation of a DAC and an ADC to a symbol (X) for which an occurrence probability is taken into account.

DESCRIPTION OF EMBODIMENTS

(Acronym)

Main alphabetical acronyms used in this description are as indicated in the following table.

Table 1. Description of Acronym

| Acronym | Official Name | Remarks |
| --- | --- | --- |
| AWGN | Additive White Gaussian Noise | Additive White Gaussian Noise |
| DM | Distribution Matching | Distribution Matching |
| FEC | Forward Error Correction | Error Correction |
| LUT | Look Up Table | Look-Up Table |
| PAM | Pulse Amplitude Modulation | Pulse Amplitude Modulation |
| PCS PS | Probabilistic Constellation Shaping Probabilistic Shaping | Probabilistic Constellation Shaping Probabilistic Shaping |
| QAM | Quadrature Amplitude Modulation | Quadrature Amplitude Modulation |
| QPSK | Quadrature Phase-Shift-Keying | Quadrature Phase-Shift-Keying |

(Introduction 1, on Compression Shaping)

Generally, a core network does not perform information source coding that provides a data compression effect, and equalizes 0/1 by bit scrambling, assumes an equal distribution input, and performs only channel coding such as error correction (hereinafter, referred to as "FEC") or probabilistic constellation shaping (hereinafter, referred to as "PS").
However, since an effective amount of communication traffic fluctuates, if information source coding that enables real time data compression can be implemented, an advantage is great.
A basic concept of compression shaping is to fuse information source coding and channel coding, in other words, implement joint source-channel coding.

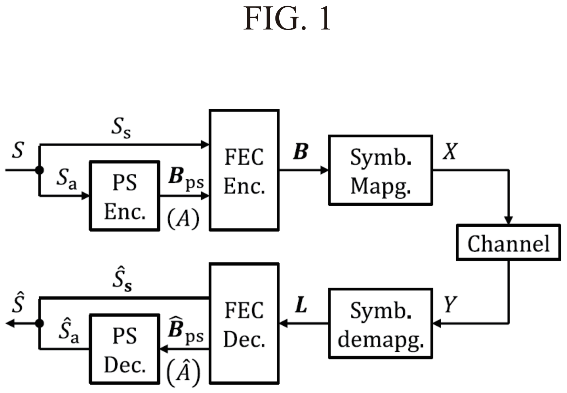

FIG. 1 illustrates a system model that indicates an optical fiber communication system. S appearing in FIG. 1 represents an information bit, and is expressed by a binary number. As illustrated in FIG. 1, the information bit (S) is classified into an encoding information bit ($S_s$) and an amplitude information bit ($S_a$). k [bit] amplitude information bits ($S_a$) are collectively subjected to PS encoding. An encoded symbol is represented by A. The number of A obtained by PS encoding is n [symbol]. For ease of description, the symbol (X) to be sent to a channel takes a one-dimensional real number, two symbols are combined as a complex symbol, and two complex symbols are combined as a polarization multiplexing complex symbol. The number of bits constituting the symbol (X) to be sent to a channel is represented by m. Furthermore, A is equal to an absolute value of X. In a case of, for example, polarization multiplexing 16-QAM, m = 2 holds. A is expressed by a bit sequence ($B_{ps}$ that is an m-1th dimensional binary). The encoding information bits ($S_s$) and a PS encoding bit sequence ($B_{ps}$) ($k_c$ [bit] in total) are systematically subjected to FEC encoding as information bits. ($n_c$-$k_c$) [bit] parity bits are added to $k_c$ [bit] FEC information bits. The symbol (X) is generated from a bit sequence (B that is an mth dimensional binary) subjected to FEC encoding. A bit ($B_{sign}$) for controlling a sign of the symbol (X) in the bit sequence (B) includes the encoding information bits ($S_s$) and the FEC parity bits. Furthermore, a bit sequence for controlling A that is the absolute value of the symbol (X) includes only $B_{ps}$. It may be assumed that a channel can be approximated by a discrete memoryless AWGN. The transmission symbol (X) is converted into a reception symbol (Y).

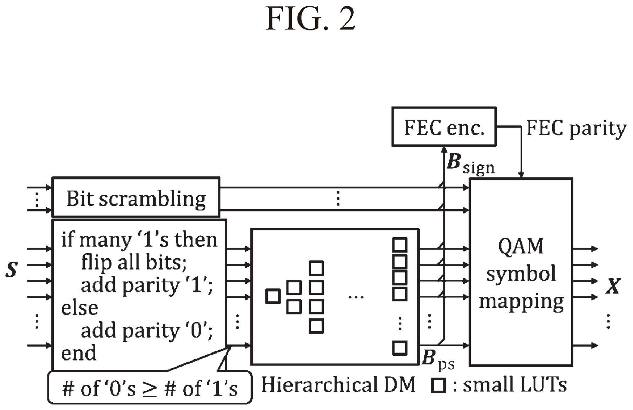

FIG. 2 is a view 1 for describing compression shaping, and illustrates an example of a functional block configuration. Official names of the acronyms appearing in FIG. 2 can be referred to in above-described Table 1 (a table related to explanation of the acronyms). S appearing in FIG. 2 represents an information bit. Ss that is part of S is subjected to bit scrambling and is allocated to a sign bit. The sign bit is used to determine coordinates of a QAM symbol. The FEC parity bits are a distribution whose probability distribution cannot be controlled, and in which "0" and "1" are generally substantially equal. Hence, the FEC parity bit is allocated to the sign bit. $S_a$ of a remaining information bit is subjected to following conditional branching processing as preprocessing.

Condition: if, within a certain unit length, the number of "1"s is large,
YES: All input bits are subjected to bit inversion, a parity bit of "1" is added, and the result is output.
NO: A parity bit of "0" is added to the input bits, and the result is output. This corresponds to a fact that, when an alarm signal is sent, all inputs to this function are "1".

A block indicated by "Hierarchical DM" in FIG. 2 performs PS by performing hierarchical distribution matching (hereinafter, referred to as "hierarchical distribution matching"). As illustrated in FIG. 2, hierarchical distribution matching is configured using a large number of small-scale LUTs. An input bit sequence and an output bit sequence stored in each LUT are sorted as exemplified in, for example, the following table.

Table 2. Example of Compressing Shaping Encoding (Case of Ps(1) = 0.3)

| $S_a$ | $B_{ps}$ | A | E | Pr |
|-------|----------|------|---|-------|
| 000 | 0000 | 1111 | 1 | 0.343 |
| 001 | 0001 | 1113 | 3 | 0.147 |
| 010 | 0010 | 1131 | 3 | 0.147 |
| 100 | 0100 | 1311 | 3 | 0.147 |
| 011 | 1000 | 3111 | 3 | 0.063 |
| 101 | 0011 | 1133 | 5 | 0.063 |
| 110 | 0110 | 1331 | 5 | 0.063 |
| 111 | 1100 | 3311 | 5 | 0.027 |

Here, Ps(1) represents a probability that S takes "1", and is also referred to as a mark ratio. Table 2 shows a case where the mark ratio is 0.3.

As shown in Table 2, the input bit sequence is sorted in such a way that the number of "1"s (Hamming weight = the number of non-zero components) included therein are in ascending order. Furthermore, values of output statistics are sorted so that, for example, expected values of average symbol energy (E) are in ascending order. This sorting is performed before signal transmission. The main signal transmission is carried out after writing to the LUT has been completed.

The average symbol energy (E) is defined as an expected value of a square of A. To put it differently, the average symbol energy (E) is calculated as an average of squares of distances from an origin. In a case of, for example, A={1, 1, 1, 3} cited as a second example of Table 2, the average symbol energy (E) is defined as "$(1^2+1^2+1^2+3^2)/4= 3$".

Pr appearing in Table 2 represents a probability of each case calculated on the basis of Ps(1).

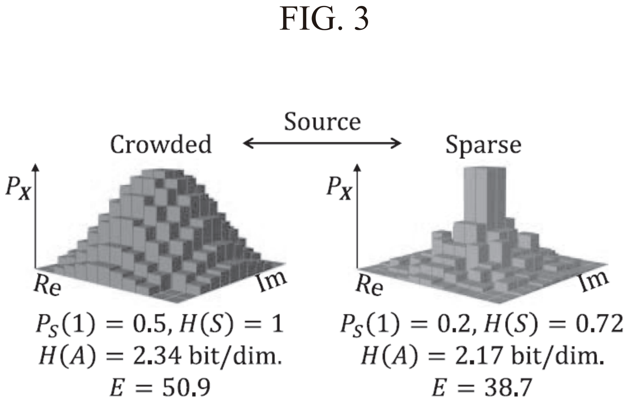

FIG. 3 is a view 2 for describing compression shaping, and illustrates an example of a symbol probability distribution. More specifically, FIG. 3 illustrates an example of a PS-128-QAM symbol probability distribution that is based on a bit sequence related to a modulated symbol amplitude (A) of a hierarchical distribution matching output.

The left side of FIG. 3 illustrates a case where Ps(1) that is an information source mark ratio is 50 [%], that is, an information entropy (H(S)) is 1.

The right side of FIG. 3 illustrates a case where Ps(1) that is the information source mark ratio is 20 [%], that is, the information entropy (H(S)) is 0.72. In a case where an information source is relatively sparse, a probability distribution concentrates at the center more. The example of the right side of FIG. 3 has larger kurtosis compared to the example of the left side.

When the information entropy (H(S)) lowers during compression shaping as illustrated in FIG. 3, a symbol entropy (H(A)) and the average symbol energy (E) also lower, so that it is possible to reduce an SNR necessary to obtain communication quality that satisfies a specification.

The term "compression" of compression shaping does not mean to decrease the number of bit slots. Because the symbol entropy and the average symbol energy can be reduced as if the number of bit slots that expressed an information source decreased (were compressed) during compression shaping, expressions such as "compression" or "artificial compression" are used. Furthermore, compression shaping does not need a large-scale storage device and does not cause processing delay, either, and therefore is also expressed as a technology of performing "real-time compression".

(Introduction 2, on Pilot Symbol)

In the technical field of optical modulation, symbols mean symbols (such as X and Y appearing in introduction 1) associated with a "state" of a light wave.

A generally known pilot symbol is a known symbol prepared in advance, and is used to detect a cycle slip (e.g., WO 2010/138198 A).

On the other hand, although a known symbol is also used in the technology of the present disclosure (see, for example, a known symbol generation unit 112 and a known symbol insertion unit 113 to be described later), the known symbol according to the technology of the present disclosure is used in association with average symbol energy that is a central theme of the technology of the present disclosure.

Note that the known symbol according to the technology of the present disclosure is substantially the same as a pilot symbol. Accordingly, the known symbol can be used not only uniquely to the technology of the present disclosure, but also for usage of a general pilot symbol.

Embodiment 1.

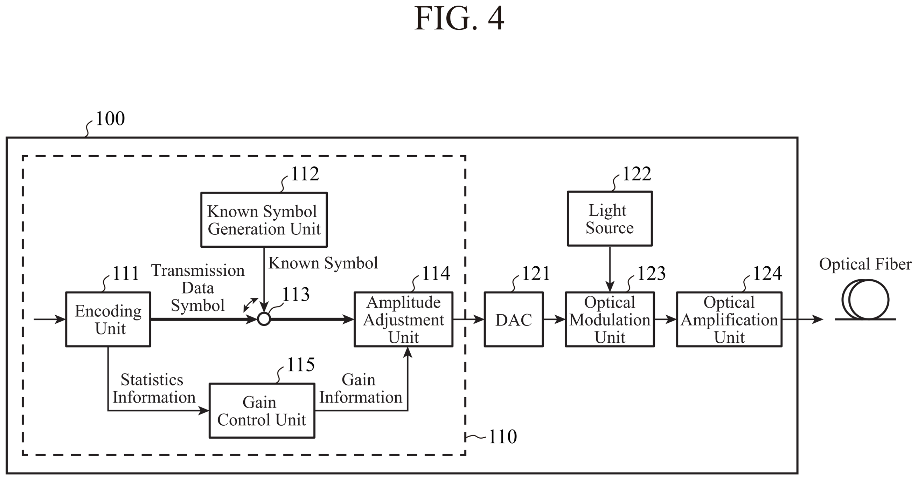

FIG. 4 is a block diagram illustrating a functional configuration of an optical transmitter 100 according to Embodiment 1. As illustrated in FIG. 4, the optical transmitter 100 according to Embodiment 1 includes a transmission digital signal generation circuit 110, a DAC 121, a light source 122, an optical modulation unit 123, and an optical amplification unit 124.

The transmission digital signal generation circuit 110 included in the optical transmitter 100 according to Embodiment 1 includes an encoding unit 111, the known symbol generation unit 112, the known symbol insertion unit 113, an amplitude adjustment unit 114, and a gain control unit 115.

Each functional configuration of the optical transmitter 100 according to Embodiment 1 is connected as illustrated in FIG. 4.

Special technical features of the optical transmitter 100 according to the technology of the present disclosure include that the optical transmitter 100 includes the gain control unit 115.

<<Encoding Unit 111 That Constitutes Transmission Digital Signal Generation Circuit 110>>

The encoding unit 111 that constitutes the transmission digital signal generation circuit 110 is a component that generates a transmission data symbol on the basis of external information. Furthermore, as illustrated in FIG. 4, the encoding unit 111 outputs "statistics information" to the gain control unit 115. The statistics information output by the encoding unit 111 is statistical information related to the transmission data symbol that changes from time to time. The statistics information intended by the technology of the present disclosure is, for example, an average mark ratio, an entropy, a probability distribution, and modulation formation information. Details of the statistics information will be made more apparent from description on numerical value examples to be described later.

<<Known Symbol Generation Unit 112 That Constitutes Transmission Digital Signal Generation Circuit 110>>

The known symbol generation unit 112 that constitutes the transmission digital signal generation circuit 110 is a component that generates a known symbol periodically inserted between two neighboring transmission data symbols. As described in introduction 2, the known symbol generated by the known symbol generation unit 112 is substantially the same as a pilot symbol.

<<Known Symbol Insertion Unit 113 That Constitutes Transmission Digital Signal Generation Circuit 110>>

The known symbol insertion unit 113 that constitutes the transmission digital signal generation circuit 110 is a component that periodically inserts the known symbol between the two neighboring transmission data symbols.

The known symbol insertion unit 113 inserts the known symbol at a cycle designed in advance. The frequency of appearance of the known symbol may be less than a frequency of appearance of the transmission data symbol. Furthermore, the frequency of appearance of the known symbol may be increased to increase a probability that a receiver can correctly detect a signal.

In this description, the transmission data symbol and the known symbol jointed by the known symbol insertion unit 113 are collectively referred to as a "transmission symbol".

<<Amplitude Adjustment Unit 114 That Constitutes Transmission Digital Signal Generation Circuit 110>>

The amplitude adjustment unit 114 that constitutes the transmission digital signal generation circuit 110 is a component that converts a transmission symbol into a transmission digital signal in such a way that the transmission symbol is converted into an analog electrical signal of an appropriate amplitude by the DAC 121 at a subsequent stage. Processing performed by the amplitude adjustment unit 114 in this description will be referred to as "digital amplitude adjustment". The amplitude adjustment unit 114 performs digital amplitude adjustment on the basis of gain information obtained by the gain control unit 115 to be described later. Details of the digital amplitude adjustment performed by the amplitude adjustment unit 114 will be made more apparent from description on numerical value examples to be described later.

According to conventional core large-volume optical fiber communication, a fixed gain coefficient is used for digital amplitude adjustment, and a gain does not dynamically change. On the other hand, the transmission digital signal generation circuit 110 and the optical transmitter 100 according to the technology of the present disclosure dynamically perform digital amplitude adjustment. Special technical features of the optical transmitter 100 according to the technology of the present disclosure include that the optical transmitter 100 dynamically performs digital amplitude adjustment.

<<Gain Control Unit 115 That Constitutes Transmission Digital Signal Generation Circuit 110>>

The gain control unit 115 that constitutes the transmission digital signal generation circuit 110 is a component that dynamically generates gain information on the basis of statistics information that changes from time to time. Thus, since the gain information generated by the gain control unit 115 dynamically changes, processing performed by the gain control unit 115 will be referred to as "amplification gain control" or simply as "gain control". Gain control performed by the gain control unit 115 enables dynamic digital amplitude adjustment.

<<DAC121>>

The DAC 121 is a component that converts the transmission digital signal into the analog electrical signal. The DAC 121 is a digital-to-analog converter.

<<Light Source 122>>

The light source 122 is a component that emits coherent continuous light for implementing optical fiber communication. The light source 122 is typically a light emitting device such as a Light Emitting Diode (LED), a Semiconductor Laser (LD), or a Quantum Well (QW) laser.

<<Optical Modulation Unit 123>>

The optical modulation unit 123 is a component that performs optical modulation on the continuous light emitted by the light source 122 on the basis of the analog electrical signal output by the DAC 121.

According to core large-volume optical fiber communication, multi-value conversion such as polarization MIMO by 256 QAM is expected for Beyond 5G. Hence, an optical modulation unit designed so as to be able to sufficiently support this multi-value conversion is used for the optical modulation unit 123 according to the technology of the present disclosure.

A signal obtained by optical modulation of the optical modulation unit 123 will be referred to as an optical signal. The light signal is sent to the optical amplification unit 124.

<<Optical Amplification Unit 124>>

The optical amplification unit 124 is a component that optically amplifies the light signal. The optical amplification unit 124 is an optical amplifier. The light signal optically amplified by the optical amplification unit 124 is output to a channel. The channel is an optical fiber in a case of optical fiber communication.

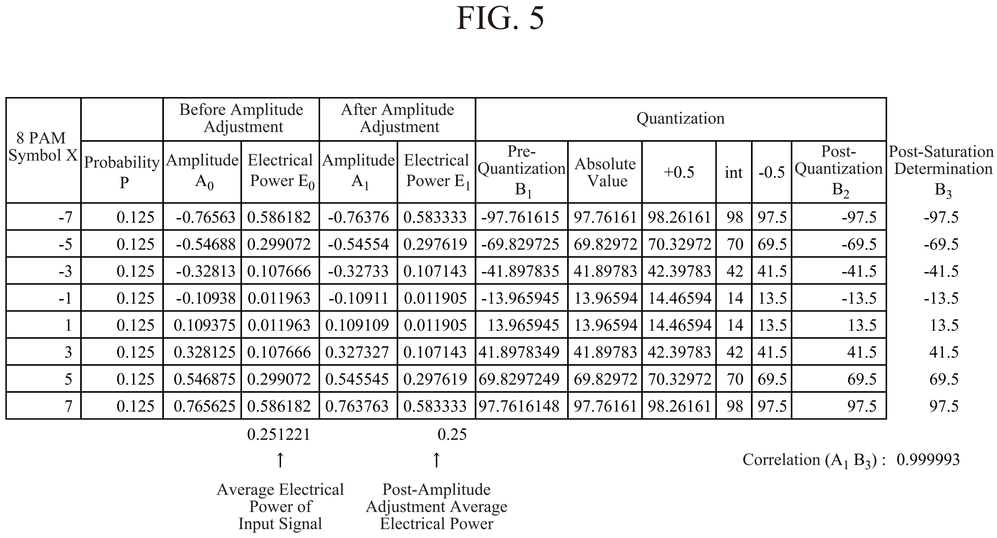

(Numerical Value Example in FIG. 5)

FIG. 5 is a view illustrating a numerical value example of digital amplitude adjustment of an optical transmitter according to a conventional technology. In the numerical value example illustrated in FIG. 5, the first column from the left indicates the symbol (X). This numerical example assumes 8 PAM whose symbols are {-7, -5, -3, -1, 1, 3, 5, 7}.

In the numerical value example illustrated in FIG. 5, the second column from the left indicates a probability of appearance of the symbol (X). It has been assumed that an appearance probability of the symbol (X) is equal in the optical transmitter according to the conventional technology.

In the numerical value example illustrated in FIG. 5, the first row from the top indicates a case where the symbol (X) is "-7". When the case where the symbol (X) is "-7" is taken as an example, the appearance probability is given by an equation as follows.

$$P_X(-7) \;\; = \;\; 0.125 \qquad \ldots \quad (1)$$

For a function that expresses the probability in this way, alphabetical P is used.

In the numerical value example illustrated in FIG. 5, the third column from the left indicates a pre-amplification adjustment amplitude ($A_0$). The pre-amplification adjustment amplitude ($A_0$) is expressed by the following equation.

$$A_0 \;\; = \;\; \frac{k_0 X}{q} \qquad \ldots \quad (2)$$

In this regard, $k_0$ represents a default coefficient, and q represents a half of a quantization number of the DAC. In the numerical value example illustrated in FIG. 5, the default coefficient ($k_0$) is 14 and the DAC is 8 [bit], and q = 256/2 holds. In the case where the symbol (X) is "-7", the pre-amplification adjustment amplitude ($A_0$) is more specifically calculated as follows.

$$A_0|_{X=-7} \;\; = \;\; \frac{\overbrace{14}^{k_0} \times \overbrace{(-7)}^{X}}{\underbrace{(256 \div 2)}_{q}} \qquad \ldots \quad (3)$$

$$= \;\; -0.76563$$

Note that both the lower right subscript number "0" used for $A_0$ and the lower right subscript number "0" used for $k_0$ are serial numbers for distinguishing a situation from other situations to be described later, and do not have other meanings.

A definition of the simplest amplitude is that the simplest amplitude is proportional to the symbol (X) as can be seen in the equation (2) and the equation (3). Conversion given only by proportionality as described above is linear conversion. Unlike a numerical value example of the equation (3), to put it the most simply, linear conversion may be performed where an amplitude corresponding to a maximum positive symbol (X = 7) is 1, and an amplitude corresponding to an opposite negative symbol (X = -7) is -1.

In the numerical value example illustrated in FIG. 5, the fourth column from the left indicates pre-amplification adjustment electrical power ($E_0$). Strictly speaking, it is not possible to measure electrical power of the digital symbol (X). The electrical power described here means a value obtained by squaring the amplitude similarly to the average symbol energy. By the way, this definition derives from a fact that average electrical power of a signal of a sine wave is proportional to the square of the amplitude of the signal. The pre-amplification adjustment electrical power ($E_0$) is given by the following equation.

$$E_0 \;\; := \;\; A_0{}^2 \qquad \ldots \quad (4)$$

In the case where the symbol (X) is "-7", the pre-amplification adjustment electrical power ($E_0$) is more specifically calculated as follows.

$$E_0|_{X=-7} \;\; = \;\; (-0.76563)^2 \qquad \ldots \quad (5)$$

$$= \;\; 0.586182$$

Now, an expected value of electrical power before amplification adjustment (hereinafter, referred to as "average electrical power of an input signal") is given by the following equation.

$$\overline{E_0} = \mathbb{E}[E_0]$$
$$= P_X(-7)E_0|_{X=-7} + P_X(-5)E_0|_{X=-5} + \cdots + P_X(7)E_0|_{X=7} \quad \cdot \cdot \cdot \quad (6)$$

In this regard, E of a script font represents an expected value.

In the numerical value example illustrated in FIG. 5, the average electrical power of the input signal is the following value.

$$\overline{E_0} = 0.251221, in\ FIG.5 \ \dots (7)$$

In the numerical value example illustrated in FIG. 5, the fifth column from the left indicates a post-amplification adjustment amplitude ($A_1$), and the sixth column from the left indicates post-amplification adjustment electrical power ($E_1$).

Digital amplitude adjustment is performed by adjusting the above-described default coefficient ($k_0$). Taking an analogy of the equation (2) into account, the post-amplification adjustment amplitude ($A_1$) is given by the following equation.

$$A_1 = \frac{k_1 X}{q} \quad \cdot \cdot \cdot \quad (8)$$

Both the lower right subscript number "1" used for $A_1$ and the lower right subscript number "1" used for $k_1$ are serial numbers for distinguishing a situation from other situations to be described later, and do not have other meanings.

How to determine $k_1$ will be made more apparent from description to be described later.

The pre-amplification adjustment electrical power ($E_1$) is given by the following equation similarly to the equation (4).

$$E_1 := A_1{}^2 \quad \cdot \cdot \cdot \quad (9)$$

An expected value of electrical power after amplification adjustment (hereinafter, referred to as "post-amplification adjustment average electrical power") is given by the following equation.

$$\overline{E_1} = \mathbb{E}[E_1]$$
$$= P_X(-7)E_1|_{X=-7} + P_X(-5)E_1|_{X=-5} + \cdots + P_X(7)E_1|_{X=7} \quad \cdot \cdot \cdot \quad (10)$$

In the numerical value example illustrated in FIG. 5, digital amplitude adjustment is performed in such a way that the post-amplification adjustment average electrical power is 0.25. In this case, a value of $k_1$ appearing in the equation (8) only needs to be determined as follows.

$$k_1 = \left(\frac{\overline{E_1}}{\overline{E_0}}\right)^{\frac{1}{2}} k_0$$
$$= \sqrt{\frac{0.25}{0.251221}} \times 14 \quad \cdot \cdot \cdot \quad (11)$$
$$= 13.96594$$

In the numerical value example illustrated in FIG. 5, the seventh column from the left indicates a pre-quantization amplitude ($B_1$). The pre-quantization amplitude ($B_1$) is given by the following equation.

$$B_1 = qA_1 \quad \cdot \cdot \cdot \quad (12)$$

The equation (12) means allocating the post-amplification adjustment amplitude ($A_1$) for conversion by the DAC 121 assuming that a full scale of the post-amplification adjustment amplitude ($A_1$) ranges from -1.0 to +1.0. This may be understood as that, for example, a range of an output voltage is from -1.0 [V] to +1.0 [V] in the specification of the DAC 121.

In the case where the symbol (X) is "-7", the pre-quantization amplitude ($B_1$) is more specifically calculated as follows.

$$B_1|_{X=-7} = qA_1|_{X=-7}$$
$$= \frac{256}{2} \times (-0.76376) \qquad \cdots \quad (1\,3)$$
$$= -97.761615$$

In the numerical value example illustrated in FIG. 5, the twelfth column from the left indicates a post-quantization amplitude ($B_2$). The post-quantization amplitude ($B_2$) is given by the following equation.

$$B_2 = \text{sign}(B_1)\{\text{int}(|B_1| + 0.5) - 0.5\} \qquad \cdots \quad (1\,4)$$

Here, int() appearing on the right side of the equation (14) is a function of rounding down a decimal point or less and obtaining an integer. Furthermore, sign() is a sign function, and is a function of returning one of +1, -1, and 0 depending on the sign of an argument.

In the numerical value example illustrated in FIG. 5, the eighth to eleventh columns from the left are merely subjected to deformation expressed in the equation (14) stepwise.

In the numerical value example illustrated in FIG. 5, the thirteenth column from the left indicates whether or not the post-quantization amplitude ($B_2$) does not exceed the quantization number of the DAC. In the example illustrated in FIG. 5, since q = 128 holds, if the post-quantization amplitude ($B_2$) exceeds 127.5, the post-quantization amplitude ($B_2$) is set to 127.5. Note that in a case where the post-quantization amplitude ($B_2$) is negative, the same processing is also performed. That is, the thirteenth column from the left simulates saturation of the DAC.

In the numerical value example illustrated in FIG. 5, any amplitude does not exceed the quantization number of the DAC. Although the value is the same, a post-saturation determination amplitude is represented by $B_3$ to distinguish from the post-quantization amplitude ($B_2$). The post-saturation determination amplitude ($B_3$) is given by the following equation.

$$B_3 = \begin{cases} \text{sign}(B_2) \times 127.5 & \text{if } |B_2| > 127.5 \\ B_2 & \text{else} \end{cases} \qquad \cdots \quad (1\,5)$$

Here, sign() appearing in the equation (15) is a sign function similarly to that appearing in the equation (14).

In FIG. 5, there is a portion indicated as "CORRELATION: 0.999993". The correlation illustrated here is a correlation between the post-amplification adjustment amplitude ($A_1$) and the post-saturation determination and post-quantization amplitude ($B_3$). The correlation between the post-amplification adjustment amplitude ($A_1$) and the post-saturation determination and post-quantization amplitude ($B_3$) is given by the following equation.

$$Correl(A_1, \quad B_3) = \frac{\sum(A_1 - \overline{A_1})(B_3 - \overline{B_3})}{\sqrt{\sum(A_1 - \overline{A_1})^2 \sum(B_3 - \overline{B_3})^2}} \qquad \cdots \quad (1\,6)$$

In this regard, an accent symbol of a horizontal bar appearing in the equation (16) represents a sample mean. Correl() on the left side of the equation (16) is a function of obtaining a correlation. A value obtained by calculation indicated on the right side of the equation (16) will be also referred to as a correlation coefficient. The correlation or the correlation coefficient indicates that there is a positive (+1) or negative (-1) correlation between sequences (between $A_1$ and $B_3$ in this case) as the correlation or the correlation coefficient is closer to +1 or -1.

A light signal is sampled by the Analog Digital Converter (ADC) of the receiver through the channel. The receiver finally calculates an estimation value of the symbol (X) on the basis of the digital signal acquired by sampling by the ADC.

The transmitter and the receiver perform optical modulation and demodulation on the basis of a common rule such as contents defined according to various standards. When the receiver side can correctly estimate the symbol (X) on the basis of this common rule, any symbol to be mapped in a consolation map does not need to be mapped at equal intervals.

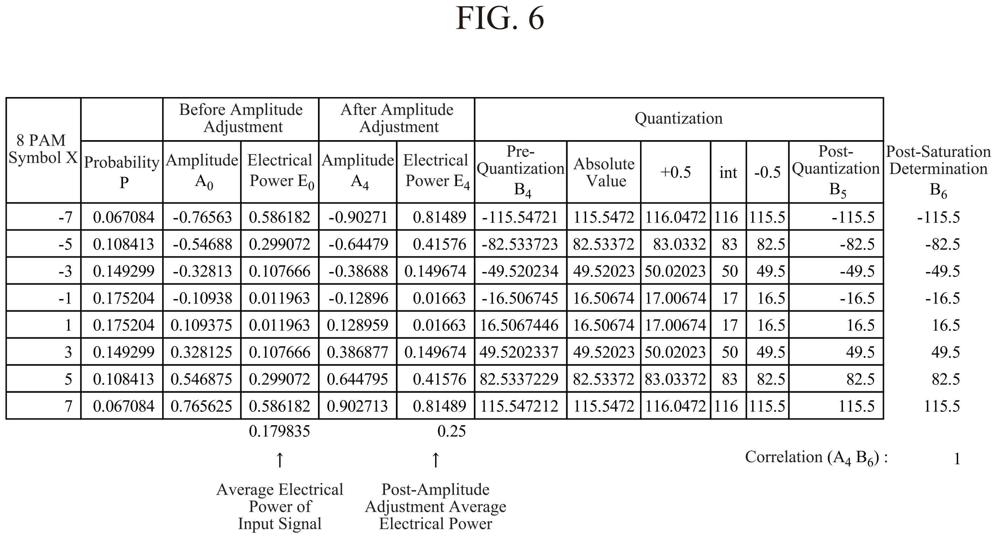

(Numerical Value Example in FIG. 6)

FIG. 6 is a view 1 illustrating a numerical value example of digital amplitude adjustment of the optical transmitter 100 that performs compression shaping.

As is clear upon comparison with FIG. 5, the appearance probability of the symbol (X) is not equal in the numerical value example in FIG. 6. The appearance probability of the symbol (X) illustrated in FIG. 6 is more specifically given by the following equation.

$$P_X \quad = \quad \frac{\exp(-0.02X^2)}{\sum_{Y \in \{-7,-5,-3,-1,1,3,5,7\}} \exp(-0.02Y^2)} \qquad \cdots \quad (1\,7)$$

Here, a numerator in the equation (17) indicates a Gaussian distribution. 0.02 appearing in the equation (17) is a parameter related to dispersion of the Gaussian distribution.

In the case where the symbol (X) is "-7", the appearance probability is more specifically calculated as follows.

$$P_X(-7) \quad = \quad \frac{\exp\{-0.02(-7)^2\}}{\underbrace{\{0.37531 + 0.60653 + \cdots + 0.37531\}}_{5.594621}} \qquad \cdots \quad (1\,8)$$
$$= \quad 0.067084$$

In the numerical value example illustrated in FIG. 6, too, the average electrical power of the input signal is given by the equation (6). In the numerical value example illustrated in FIG. 6, the average electrical power of the input signal is the following value.

$$\overline{E_0} = 0.179835 \; in \; FIG.6 \; \ldots (19)$$

Digital amplitude adjustment is performed by adjusting the above-described default coefficient ($k_0$). Similarly to the equation (8), a post-amplification adjustment amplitude ($A_4$) is given by the following equation.

$$A_4 \quad = \quad \frac{k_4 X}{q} \qquad \cdots \quad (2\,0)$$

Both the lower right subscript number "4" used for $A_4$ and the lower right subscript number "4" used for $k_4$ are serial numbers for distinguishing a situation from other situations to be described later, and do not have other meanings.

How to determine $k_4$ will be made more apparent from description to be described later.

In the numerical value example in FIG. 6, the post-amplification adjustment average electrical power is given by the following equation similarly to the equation (10).

$$\overline{E_4} \quad = \quad \mathbb{E}[E_4]$$
$$= \quad P_X(-7)E_4|_{X=-7} + P_X(-5)E_4|_{X=-5} + \cdots + P_X(7)E_4|_{X=7} \qquad \cdots \quad (2\,1)$$

In the numerical value example illustrated in FIG. 6, digital amplitude adjustment is performed in such a way that the post-amplification adjustment average electrical power is 0.25. In this case, a value of $k_4$ appearing in the equation (20) may be determined as follows.

$$k_4 \quad = \quad \left(\frac{\overline{E_4}}{\overline{E_0}}\right)^{\frac{1}{2}} k_0$$
$$= \quad \sqrt{\frac{0.25}{0.179835}} \times 14 \qquad \cdots \quad (2\,2)$$
$$= \quad 16.50674$$

In the numerical value example illustrated in FIG. 6, the seventh column from the left indicates a pre-quantization amplitude ($B_4$). The pre-quantization amplitude ($B_4$) is given by the following equation similarly to the equation (12).

$$B_4 \quad = \quad q A_4 \qquad \cdots \quad (2\,3)$$

In the case where the symbol (X) is "-7", the pre-quantization amplitude ($B_4$) is more specifically calculated as

follows.

$$
\begin{aligned}
B_4|_{X=-7} &= qA_4|_{X=-7} \\
&= \frac{256}{2} \times (-0.90271) \qquad \ldots \quad (24) \\
&= -115.54721
\end{aligned}
$$

In the numerical value example illustrated in FIG. 6, the twelfth column from the left indicates a post-quantization amplitude ($B_5$). The post-quantization amplitude ($B_5$) is given by the following equation.

$$
B_5 = \mathrm{sign}(B_4)\{\mathrm{int}(|B_4| + 0.5) - 0.5\} \qquad \ldots \quad (25)
$$

In the numerical value example illustrated in FIG. 6, the eighth to eleventh columns from the left are merely subjected to deformation expressed in the equation (25) stepwise.
In the numerical value example in FIG. 6, a post-saturation determination amplitude ($B_6$) is given by the following equation similarly to the equation (15).

$$
B_6 = \begin{cases} \mathrm{sign}(B_5) \times 127.5 & \text{if } |B_5| > 127.5 \\ B_5 & \text{else} \end{cases} \qquad \ldots \quad (26)
$$

In the numerical value example illustrated in FIG. 6, the post-quantization amplitude ($B_5$) is not saturated.
In the numerical value example illustrated in FIG. 6, a correlation between $A_4$ and $B_6$ is 1 (calculated according to the equation (16)).

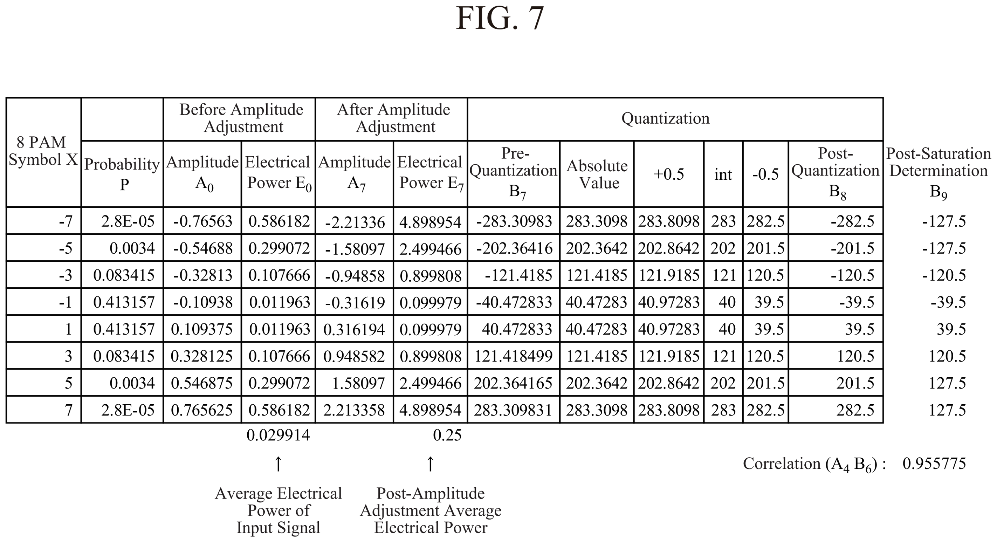

(Numerical Value Example in FIG. 7)

FIG. 7 is a view 2 illustrating a numerical value example of digital amplitude adjustment of the optical transmitter 100 that performs compression shaping. The numerical value example illustrated in FIG. 7 simulates a case where an appearance probability of a symbol distant from the origin is low, and average electrical power of an input signal remarkably lowers as a result.
The appearance probability of the symbol (X) illustrated in FIG. 7 is more specifically given by the following equation.

$$
P_X = \frac{\exp(-0.2X^2)}{\sum_{Y \in \{-7,-5,-3,-1,1,3,5,7\}} \exp(-0.2Y^2)} \qquad \ldots \quad (27)
$$

As indicated in the equation (27), in the numerical value example in FIG. 7, a parameter related to the dispersion of the Gaussian distribution is 0.2, and is ten times larger than 0.02 in the equation (17) .
In the case where the symbol (X) is "-7", the appearance probability is more specifically calculated as follows.

$$
\begin{aligned}
P_X(-7) &= \frac{\exp\{-0.2(-7)^2\}}{\underbrace{\{0.00006 + 0.00674 + \cdots + 0.00006\}}_{1.981646}} \qquad \ldots \quad (28) \\
&= 2.8 \times 10^{-5}
\end{aligned}
$$

Thus, in the numerical value example illustrated in FIG. 7, a probability that the symbol (X) is -7 is very low. The probability that the symbol (X) is 7 is also low likewise.
In the numerical value example illustrated in FIG. 7, too, the average electrical power of the input signal is given by the equation (6). In the numerical value example illustrated in FIG. 7, the average electrical power of the input signal is the following value.

$$
\overline{E_0} = 0.029914 \ in \ FIG.7 \ \ldots (29)
$$

Digital amplitude adjustment is performed by adjusting the above-described default coefficient ($k_0$). Similarly to

the equation (8), a post-amplification adjustment amplitude ($A_7$) is given by the following equation.

$$A_7 \;=\; \frac{k_7 X}{q} \qquad \ldots \quad (30)$$

Here, if digital amplitude adjustment is performed in such a way that the post-amplitude adjustment average electrical power becomes 0.25, $k_7$ is given as follows.

$$
\begin{aligned}
k_7 \;&=\; \left(\frac{\overline{E_7}}{\overline{E_0}}\right)^{\frac{1}{2}} k_0 \\
&=\; \sqrt{\frac{0.25}{0.029914}} \times 14 \qquad \ldots \quad (31) \\
&=\; 40.47283
\end{aligned}
$$

$k_7$ given by the equation (31) is large compared to above-described k1 (= 13.96594) and k4 (= 16.50674).

As a result, in the case where the symbol (X) is -7, $A_7$ is calculated as follows.

$$
\begin{aligned}
A_7|_{X=-7} \;&=\; \frac{40.47283 \times (-7)}{\left(\frac{256}{2}\right)} \qquad \ldots \quad (32) \\
&=\; -2.21336 \\
&<\; -1
\end{aligned}
$$

Here, as shown in Equation (12), if the post-amplitude adjustment amplitude (A7) is allocated to DAC 121 for conversion, with the full scale assumed to range from -1.0 to +1.0, this naturally results in an undesirable phenomenon.

As illustrated in FIG. 7, in a case of a symbol whose absolute value of the post-amplification adjustment amplitude ($A_7$) is larger than one, more specifically, in four cases of X = {-7, -5, 5, 7}, each post-saturation determination value (B9) is saturated. Such an undesirable saturation phenomenon will be referred to as "clipping (of a digital signal)" in the technical field of signal processing.

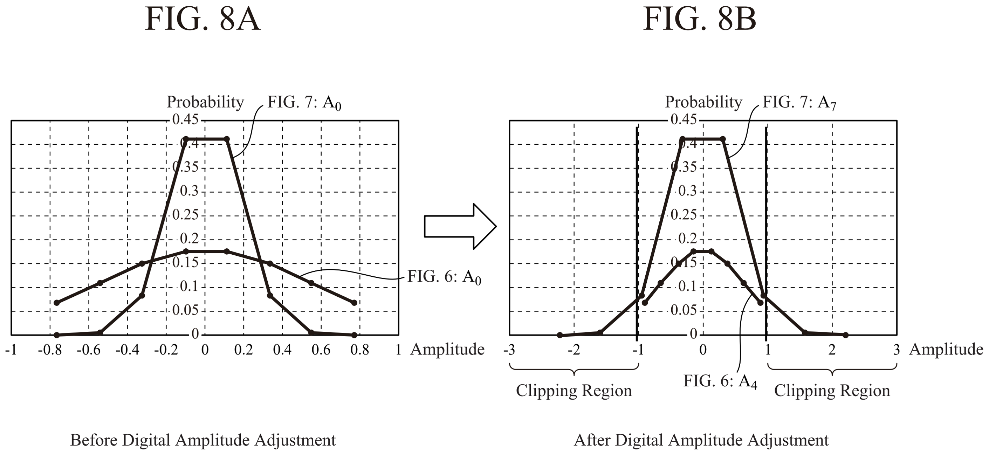

FIG. 8 is a view for describing an example where undesirable clipping occurs as a result of digital amplitude adjustment.

FIG. 8A shows a graph before digital amplitude adjustment, and two distributions of a probability distribution of $A_0$ related to FIG. 6 and the probability distribution of $A_0$ related to FIG. 7 are plotted therein.

FIG. 8B shows a graph after digital amplitude adjustment, and two distributions of a probability distribution of $A_4$ related to FIG. 6 and the probability distribution of $A_7$ related to FIG. 7 are plotted therein. As illustrated in FIG. 8B, four points of $A_7$ are included in clipping regions in the numerical value example illustrated in FIG. 7.

It can be also said that FIG. 8B suggests that conversion by the DAC 121 does not especially need to be allocated to X = {-7, -5, 5, 7} that rarely occurs. That is, if X = {-7, -5, 5, 7} does not occur, 8 PAM is excessive in the first place, and 4 PAM of X = {-3, -1, 1, 3} is sufficient. As described above, observing the probability distribution is important to determine the specifications for optical modulation.

Whether or not an optical communication device adopts digital amplitude adjustment that is based on average electrical power may be determined depending on the specification such as a use purpose and a use environment of optical communication.

(Definition of Amplitude and Allocation of DAC for Which Occurrence Probability Is Taken Into Account)

The optical transmitter 100 operates (see the equation (2) and the equation (3)) even when the amplitude is determined for the symbol (X) by performing linear conversion on a fixed coefficient.

However, by wiping off the stereotype that linear conversion is indispensable, and defining the amplitude and the DAC allocation for which the occurrence probability of the symbol (X) is taken into account, it is possible to give a larger margin to the symbol (X) with a high occurrence probability.

A method of the DAC allocation for which the occurrence probability is taken into account is understood by converting the occurrence probability into a histogram first.

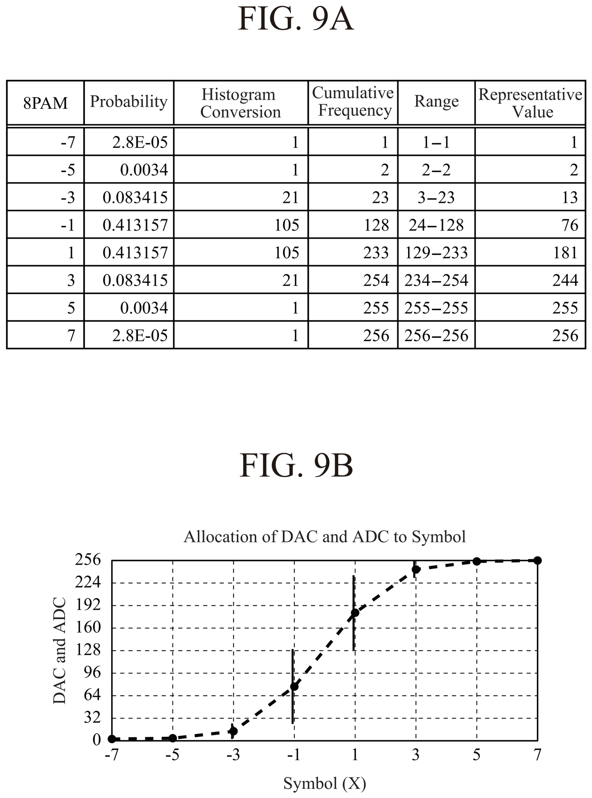

FIG. 9 is a view for describing the DAC allocation and the ADC to the symbol (X) for which the occurrence probability is taken into account. FIG. 9A describes the DAC allocation and the ADC to the symbol (X) in a table format. Furthermore, FIG. 9B describes the DAC allocation and the ADC to the symbol (X) in a graph format. The numerical value example illustrated in FIG. 7 is used for both FIGS. 9A and 9B. More specifically, in the table illustrated in FIG. 9A, the second column from the left indicates the probability (P) indicated in the second column from the left in FIG. 7.

In the table illustrated in FIG. 9A, the third column from the left indicates the occurrence probability of the symbol (X) converted into the histogram. In this regard, this histogram conversion follows the following conditions.

Condition 1: A class value of the histogram is a value of the symbol (X).
Condition 2: A frequency is non-zero in any class.
Condition 3: A total number of the frequencies is a quantization number of the DAC 121.

In the table illustrated in FIG. 9A, a total number of values in the third column from the left, that is, the total number of frequencies is the quantization number of the DAC 121, and is 256 in this numerical value example.

In the table illustrated in FIG. 9A, the fourth column from the left indicates a cumulative frequency. That is, values indicated in the fourth column are obtained by cumulating values in the third column.

In the table illustrated in FIG. 9A, the fifth column from the left indicates an allocation range of the ADC of the receiver to each symbol (X). When, for example, a value sampled by the ADC of the receiver is "5 of 256 levels", 5 is included in "3 to 23" described in the third column, and therefore the corresponding symbol (X) is determined as "-3".

That is, the size of the allocation range for each symbol (X) is the degree of the margin. Consequently, the technology of the present disclosure can give a larger margin to the symbol (X) with a high occurrence probability.

In the table illustrated in FIG. 9A, the sixth column from the left indicates a representative value of the "range" indicated in the fifth column. More specifically, the sixth column from the left indicates an intermediate value of the "range" indicated in the fifth column. This representative value is an output value output to the symbol (X) given to the DAC 121 of the optical transmitter 100. To be accurate, the DAC 121 outputs an analog electrical signal having the amplitude corresponding to the representative value of the 256 levels.

In the graph illustrated in FIG. 9B, the horizontal axis indicates the symbol (X), and the vertical axis indicates a value of the DAC or the ADC. In the graph illustrated in FIG. 9B, a broken line curve corresponds to a cumulative distribution function of the symbol (X).

Note that, when conventional linear conversion is performed, this broken line becomes a straight line.

The technical features of the transmission digital signal generation circuit 110 and the optical transmitter 100 according to the technology of the present disclosure include performing the amplitude and the DAC allocation for which the occurrence probability of the symbol (X) is taken into account. Information indicating how the DAC is allocated to this symbol (X) is shared with the receiver side of optical communication.

The transmission digital signal generation circuit 110 and the optical transmitter 100 according to the technology of the present disclosure have the above technical features, and consequently provide an effect that it is possible to give a larger margin to the symbol (X) with a high occurrence probability.

Embodiment 2.

A transmission digital signal generation circuit 110 and the optical transmitter 100 according to Embodiment 2 are modified examples of the transmission digital signal generation circuit 110 and the optical transmitter 100 according to the technology of the present disclosure. Unless clearly described in particular, the same reference numerals as those in Embodiment 1 will be used in Embodiment 2. Furthermore, Embodiment 2 will omit description that overlaps those in Embodiment 1 as appropriate.

Although Embodiment 1 targets at core large-volume optical fiber communication for which compression shaping is performed, the technology of the present disclosure is not limited thereto. The technology of the present disclosure may be applied to an optical transmitter 100 that performs ultra short burst signaling for the purpose of improvement of receiver sensitivity.

Ultra short burst signaling of a light signal is a technology of the applicants described in, for example, the following reference document.

Reference Document: "Receiver Sensitivity Improvement by Ultra Short Burst Signaling in 10 Gb/s QPSK FSO Communications", Shota Koshikawa, Keisuke Matsuda, Masashi Binkai, Tsuyoshi Yoshida, and Naoki Suzuki, 2019, the Institute of Electronics, Information and Communication Engineers General Conference, B-10-12, pp 201.

Ultra short burst signaling of a light signal is a technology that assumes a case where optical space communication is applied to communication in the atmosphere, and has a problem of line disconnection due to an increase in transmission loss at a time of a bad weather in particular. Ultra short burst signaling of a light signal is to perform burst signaling that is robust against an increase in transmission loss in exchange for a decrease in a communication capacity by concentrating power only in a short interval of the light signal. According to this ultra short burst signaling technology of a light signal, when ultra short burst signaling is performed at the time of a bad weather, average output power is kept at the same value as that at a time when burst signaling is not performed at a time of a sunny weather.

The amplitude and the DAC allocation for which the occurrence probability of the symbol (X) is taken into account may be also applied to the optical transmitter 100 for which ultra short burst signaling of a light signal is performed at the time of a bad weather.

As described above, the technology of the present disclosure is also applicable to optical communication that performs ultra short burst signaling of a light signal, and provides an effect that it is possible to give a larger margin to the symbol (X) with a high occurrence probability in such an optical communication system.

INDUSTRIAL APPLICABILITY

The technology of the present disclosure can be applied to, for example, core large-volume optical fiber communication of Beyond 5G, and has industrial applicability.

REFERENCE SIGNS LIST

100: Optical transmitter, 110: Transmission digital signal generation circuit, 111: Encoding unit, 112: Known symbol generation unit, 113: Known symbol insertion unit, 114: Amplification adjustment unit, 115: Gain control unit, 121: DAC, 122: Light source, 123: Optical modulation unit, 124: Optical amplification unit

**Claims**

1. An optical transmitter that:

   converts an occurrence probability of a symbol (X) into a histogram, and
   determines allocation of a DAC on a basis of a cumulative frequency of the histogram, wherein
   a class value of the histogram is a value of the symbol (X),
   a frequency is non-zero in any class, and
   a total number of the frequencies is a quantization number of the DAC.

2. The optical transmitter according to claim 1, wherein the optical transmitter

   performs compression shaping, and
   is used for core large-volume optical fiber communication.

3. The optical transmitter according to claim 1, wherein the optical transmitter

   performs ultra short burst signaling, and
   is used for optical space communication applied to communication in an atmosphere.

4. A transmission digital signal generation circuit to constitute an optical transmitter, wherein

   the transmission digital signal generation circuit
   converts an occurrence probability of a symbol (X) into a histogram, and
   determines allocation of a DAC on a basis of a cumulative frequency of the histogram, wherein
   a class value of the histogram is a value of the symbol (X),
   a frequency is non-zero in any class, and
   a total number of the frequencies is a quantization number of the DAC.

5. The transmission digital signal generation circuit according to claim 4, wherein the transmission digital signal generation circuit

   performs compression shaping, and
   is used for core large-volume optical fiber communication.

6. The transmission digital signal generation circuit according to claim 4, wherein the transmission digital signal generation circuit

performs ultra short burst signaling, and
is used for optical space communication applied to communication in an atmosphere.

FIG. 1

# FIG. 2

## FIG. 3

Source

Crowded ⟷ Sparse

$P_S(1) = 0.5, H(S) = 1$
$H(A) = 2.34$ bit/dim.
$E = 50.9$

$P_S(1) = 0.2, H(S) = 0.72$
$H(A) = 2.17$ bit/dim.
$E = 38.7$

EP 4 661 318 A1

# FIG. 4

EP 4 661 318 A1

# FIG. 5

| 8 PAM Symbol X | Probability P | Before Amplitude Adjustment | | After Amplitude Adjustment | | Quantization | | | | | | Post-Saturation Determination $B_3$ |
|---|---|---|---|---|---|---|---|---|---|---|---|---|
| | | Amplitude $A_0$ | Electrical Power $E_0$ | Amplitude $A_1$ | Electrical Power $E_1$ | Pre-Quantization $B_1$ | Absolute Value | +0.5 | int | -0.5 | Post-Quantization $B_2$ | |
| -7 | 0.125 | -0.76563 | 0.586182 | -0.76376 | 0.583333 | -97.761615 | 97.76161 | 98.26161 | 98 | 97.5 | -97.5 | -97.5 |
| -5 | 0.125 | -0.54688 | 0.299072 | -0.54554 | 0.297619 | -69.829725 | 69.82972 | 70.32972 | 70 | 69.5 | -69.5 | -69.5 |
| -3 | 0.125 | -0.32813 | 0.107666 | -0.32733 | 0.107143 | -41.897835 | 41.89783 | 42.39783 | 42 | 41.5 | -41.5 | -41.5 |
| -1 | 0.125 | -0.10938 | 0.011963 | -0.10911 | 0.011905 | -13.965945 | 13.96594 | 14.46594 | 14 | 13.5 | -13.5 | -13.5 |
| 1 | 0.125 | 0.109375 | 0.011963 | 0.109109 | 0.011905 | 13.965945 | 13.96594 | 14.46594 | 14 | 13.5 | 13.5 | 13.5 |
| 3 | 0.125 | 0.328125 | 0.107666 | 0.327327 | 0.107143 | 41.8978349 | 41.89783 | 42.39783 | 42 | 41.5 | 41.5 | 41.5 |
| 5 | 0.125 | 0.546875 | 0.299072 | 0.545545 | 0.297619 | 69.8297249 | 69.82972 | 70.32972 | 70 | 69.5 | 69.5 | 69.5 |
| 7 | 0.125 | 0.765625 | 0.586182 | 0.763763 | 0.583333 | 97.7616148 | 97.76161 | 98.26161 | 98 | 97.5 | 97.5 | 97.5 |

0.251221        0.25

↑          ↑

Average Electrical Power of Input Signal     Post-Amplitude Adjustment Average Electrical Power

Correlation ($A_1$ $B_3$) : 0.999993

EP 4 661 318 A1

# FIG. 6

| 8 PAM Symbol X | Probability P | Before Amplitude Adjustment | | After Amplitude Adjustment | | Quantization | | | | | | Post-Saturation Determination $B_6$ |
| | | Amplitude $A_0$ | Electrical Power $E_0$ | Amplitude $A_4$ | Electrical Power $E_4$ | Pre-Quantization $B_4$ | Absolute Value | +0.5 | int | -0.5 | Post-Quantization $B_5$ | |
|---|---|---|---|---|---|---|---|---|---|---|---|---|
| -7 | 0.067084 | -0.76563 | 0.586182 | -0.90271 | 0.81489 | -115.54721 | 115.5472 | 116.0472 | 116 | 115.5 | -115.5 | -115.5 |
| -5 | 0.108413 | -0.54688 | 0.299072 | -0.64479 | 0.41576 | -82.533723 | 82.53372 | 83.0332 | 83 | 82.5 | -82.5 | -82.5 |
| -3 | 0.149299 | -0.32813 | 0.107666 | -0.38688 | 0.149674 | -49.520234 | 49.52023 | 50.02023 | 50 | 49.5 | -49.5 | -49.5 |
| -1 | 0.175204 | -0.10938 | 0.011963 | -0.12896 | 0.01663 | -16.506745 | 16.50674 | 17.00674 | 17 | 16.5 | -16.5 | -16.5 |
| 1 | 0.175204 | 0.109375 | 0.011963 | 0.128959 | 0.01663 | 16.5067446 | 16.50674 | 17.00674 | 17 | 16.5 | 16.5 | 16.5 |
| 3 | 0.149299 | 0.328125 | 0.107666 | 0.386877 | 0.149674 | 49.5202337 | 49.52023 | 50.02023 | 50 | 49.5 | 49.5 | 49.5 |
| 5 | 0.108413 | 0.546875 | 0.299072 | 0.644795 | 0.41576 | 82.5337229 | 82.53372 | 83.03372 | 83 | 82.5 | 82.5 | 82.5 |
| 7 | 0.067084 | 0.765625 | 0.586182 | 0.902713 | 0.81489 | 115.547212 | 115.5472 | 116.0472 | 116 | 115.5 | 115.5 | 115.5 |
| | | | 0.179835 | | 0.25 | | | | | | | |

↑ (under 0.179835)  ↑ (under 0.25)

Average Electrical Power of Input Signal

Post-Amplitude Adjustment Average Electrical Power

Correlation ($A_4$ $B_6$) :    1

EP 4 661 318 A1

# FIG. 7

| 8 PAM Symbol X | Probability P | Before Amplitude Adjustment | | After Amplitude Adjustment | | Quantization | | | | | | Post-Saturation Determination $B_9$ |
|---|---|---|---|---|---|---|---|---|---|---|---|---|
| | | Amplitude $A_0$ | Electrical Power $E_0$ | Amplitude $A_7$ | Electrical Power $E_7$ | Pre-Quantization $B_7$ | Absolute Value | +0.5 | int | -0.5 | Post-Quantization $B_8$ | |
| -7 | 2.8E-05 | -0.76563 | 0.586182 | -2.21336 | 4.898954 | -283.30983 | 283.3098 | 283.8098 | 283 | 282.5 | -282.5 | -127.5 |
| -5 | 0.0034 | -0.54688 | 0.299072 | -1.58097 | 2.499466 | -202.36416 | 202.3642 | 202.8642 | 202 | 201.5 | -201.5 | -127.5 |
| -3 | 0.083415 | -0.32813 | 0.107666 | -0.94858 | 0.899808 | -121.4185 | 121.4185 | 121.9185 | 121 | 120.5 | -120.5 | -120.5 |
| -1 | 0.413157 | -0.10938 | 0.011963 | -0.31619 | 0.099979 | -40.472833 | 40.47283 | 40.97283 | 40 | 39.5 | -39.5 | -39.5 |
| 1 | 0.413157 | 0.109375 | 0.011963 | 0.316194 | 0.099979 | 40.472833 | 40.47283 | 40.97283 | 40 | 39.5 | 39.5 | 39.5 |
| 3 | 0.083415 | 0.328125 | 0.107666 | 0.948582 | 0.899808 | 121.418499 | 121.4185 | 121.9185 | 121 | 120.5 | 120.5 | 120.5 |
| 5 | 0.0034 | 0.546875 | 0.299072 | 1.58097 | 2.499466 | 202.364165 | 202.3642 | 202.8642 | 202 | 201.5 | 201.5 | 127.5 |
| 7 | 2.8E-05 | 0.765625 | 0.586182 | 2.213358 | 4.898954 | 283.309831 | 283.3098 | 283.8098 | 283 | 282.5 | 282.5 | 127.5 |

0.029914        0.25

↑        ↑

Average Electrical Power of Input Signal     Post-Amplitude Adjustment Average Electrical Power

Correlation ($A_4 B_6$) :  0.955775

EP 4 661 318 A1

## FIG. 8A

Before Digital Amplitude Adjustment

## FIG. 8B

After Digital Amplitude Adjustment

EP 4 661 318 A1

# FIG. 9A

| 8PAM | Probability | Histogram Conversion | Cumulative Frequency | Range | Representative Value |
|---|---|---|---|---|---|
| -7 | 2.8E-05 | 1 | 1 | 1−1 | 1 |
| -5 | 0.0034 | 1 | 2 | 2−2 | 2 |
| -3 | 0.083415 | 21 | 23 | 3−23 | 13 |
| -1 | 0.413157 | 105 | 128 | 24−128 | 76 |
| 1 | 0.413157 | 105 | 233 | 129−233 | 181 |
| 3 | 0.083415 | 21 | 254 | 234−254 | 244 |
| 5 | 0.0034 | 1 | 255 | 255−255 | 255 |
| 7 | 2.8E-05 | 1 | 256 | 256−256 | 256 |

# FIG. 9B

Allocation of DAC and ADC to Symbol

## INTERNATIONAL SEARCH REPORT

| International application No. |
|---|
| **PCT/JP2023/009475** |

| A. | CLASSIFICATION OF SUBJECT MATTER |
|---|---|

*H04B 10/516*(2013.01)i
FI:  H04B10/516

According to International Patent Classification (IPC) or to both national classification and IPC

| B. | FIELDS SEARCHED |
|---|---|

Minimum documentation searched (classification system followed by classification symbols)

H04B10/516

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | 吉田剛他. 光ファイバ通信における確率分布整形と擬似データ圧縮. 電子情報通信学会論文誌B. September 2020, vol. J103-B, no. 9, pp. 361-371, (YOSHIDA, Tsuyoshi et al. Probabilistic Constellation Shaping and Quasi Data Compression in Fiber-Optic Communications. IEICE Transactions on Communications.)<br>entire text, all drawings | 1-6 |
| A | JP 2020-48188 A (NOKIA SOLUTIONS AND NETWORKS OY) 26 March 2020 (2020-03-26)<br>entire text, all drawings | 1-6 |
| A | WO 2021/019620 A1 (MITSUBISHI ELECTRIC CORPORATION) 04 February 2021 (2021-02-04)<br>entire text, all drawings | 1-6 |
| A | WO 2020/174574 A1 (MITSUBISHI ELECTRIC CORPORATION) 03 September 2020 (2020-09-03)<br>entire text, all drawings | 1-6 |
| A | US 2018/0026725 A1 (ALCATEL-LUCENT USA INC.) 25 January 2018 (2018-01-25)<br>entire text, all drawings | 1-6 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 May 2023** | **23 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/009475**

| Patent document cited in search report | | | Publication date (day/month/year) | Patent family member(s) | | | Publication date (day/month/year) |
|---|---|---|---|---|---|---|---|
| JP | 2020-48188 | A | 26 March 2020 | US | 2020/0044770 | A1 | |
| | | | | entire text, all drawings | | | |
| | | | | EP | 3605906 | A1 | |
| | | | | CN | 110798267 | A | |
| WO | 2021/019620 | A1 | 04 February 2021 | US | 2022/0103285 | A1 | |
| | | | | entire text, all drawings | | | |
| | | | | EP | 3989502 | A1 | |
| | | | | CN | 114144999 | A | |
| WO | 2020/174574 | A1 | 03 September 2020 | US | 2021/0336733 | A1 | |
| | | | | entire text, all drawings | | | |
| | | | | EP | 3907950 | A1 | |
| | | | | CN | 113454962 | A | |
| US | 2018/0026725 | A1 | 25 January 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010138198 A

**Non-patent literature cited in the description**

- **TSUYOSHI YOSHIDA** ; **KOJI IGRASHI**. Probabilistic Constellation Shaping and Quasi Data Compression in Fiber-Optic Communications. *Institute of Electronics, Information and Communication Engineers journal B*, 2020, vol. J103-B (9), 361-371

- **SHOTA KOSHIKAWA** ; **KEISUKE MATSUDA** ; **MASASHI BINKAI** ; **TSUYOSHI YOSHIDA** ; **NAOKI SUZUKI**. Receiver Sensitivity Improvement by Ultra Short Burst Signaling in 10 Gb/s QPSK FSO Communications. *Institute of Electronics, Information and Communication Engineers General Conference*, 2019, 201